# EUROPEAN PATENT APPLICATION

(11) **EP 2 978 189 A1**
(43) Date of publication of application: **27.01.2016**
(21) Application number: 14177776.3
(22) Date of filing: 21.07.2014
(51) Int. Cl.: H04L 29/08, H04W 4/06, H04W 84/08, H04W 4/20

(54) **Sharing context information of a user apparatus in a Professional Mobile Radio network**

(71) Applicant: Cassidian Finland OY, 00380 Helsinki (FI)
(72) Inventor: Raunio, Antti, 00380 Helsinki (FI); Klemettinen, Vesa, 00380 Helsinki (FI); Hokkanen, Harri, 00380 Helsinki (FI)
(74) Representative: Kolster Oy Ab

(57) **Abstract**

To facilitate Professional Mobile Radio, PMR, users in a Terrestrial Trunked Radio network for obtaining information on field conditions, context information is tracked by a user apparatus and sent via a selected transport mechanism to another apparatus upon trigger event detection. Trigger event may be one of the following: a position within a specified range of a certain location, movement type, network registration status, a change to trunked/direct mode operation, TMO/DMO, direct mode operation via a repeater/ gateway/with dual watch, man-down activation/deactivation, a change in terminal profile settings, transmit inhibit activation/deactivation, power on/off, battery charge below a certain level, joining/leaving a group, acknowledging an incoming group call, speaking, taking a snapshot, starting/ending an emergency call/ambience listening call/video recording. Depending on the amount of data to be transmitted and/or whether or not a voice call is going on, transport mechanism may be user/control plane for conveying e.g. short data service/TETRA Enhanced Data Service, SDS/TEDS, messages and may be in parallel to ongoing voice calls via slot stealing.

## Description

### FIELD

The present invention relates to sharing context information generated in one user apparatus to one or more other user apparatuses.

### BACKGROUND ART

A Professional Mobile Radio (PMR) network is a mobile communication network for a special group of users, for example, for one or more enterprises or institutions. Typical examples of PMR networks are public safety type PMR networks used by public officials such as police, fire brigade and medical personnel. Consequently PMR networks are often used in field in emergency scenarios that may influence people's health or even life. Therefore it would be very useful if a field officer or an operator in a control room would be aware of what is happening on the field, for example in the surroundings of field users that form an operational team without adding more reporting to the tasks of the field users.

### SUMMARY

An object of the present invention is to increase a first user's awareness of a second user's situation without a specific input from the second user. The object of the invention is achieved by methods, an apparatus, a computer program product and a system which are characterized by what is stated in the independent claims. The preferred embodiments of the invention are disclosed in the dependent claims.

An aspect provides a first user apparatus that is used by a first user with context information of interest of a second user apparatus that is used by a second user. Herein, context information means any information that can be used to characterize the situation of the user apparatus, and the context information of interest may be a subset of the context information or comprise the same information as the context information.

### BRIEF DESCRIPTION OF THE DRAWINGS

In the following, exemplary embodiments will be described in greater detail with reference to accompanying drawings, in which
Figure 1 shows simplified architecture of a system;
Figures 2 to 4 show block diagrams of some exemplary apparatuses;
Figures 5 to 9 are flow charts illustrating different functionalities according to exemplary embodiments;
Figure 10 is a signalling chart illustrating a use case;
Figures 11 to 15 illustrates examples of displayed information; and
Figure 16 is a block diagram of an exemplary apparatus.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any equipment connectable to a private network. The present invention is especially suitable to be implemented with a professional mobile radio network, also known as private mobile radio and land mobile radio, or any corresponding system utilizing professional mobile radio network principles, i.e. an independent network that is dedicated to be used by a specific (closed) group of one or more users and which may use communication resources of a public network. The professional mobile radio network may be based on a wireless communication system or a communication system utilizing both fixed networks and wireless networks. The protocols used, the specifications of communication systems, networks, apparatuses belonging to network infrastructure, like access point nodes, controlling nodes and wireless apparatuses, develop rapidly. Such development may require extra changes to an embodiment. Therefore, all words and expressions should be interpreted broadly and they are intended to illustrate, not to restrict, the embodiment.

In the following, different embodiments will be described using, as an example of a system architecture whereto the embodiments may be applied, an architecture based on a Terrestrial Trunked Radio (TETRA) network providing the professional mobile radio network. Other examples of systems that may provide the professional mobile radio network or a corresponding independent network include TETRAPOL, DMR (digital mobile radio) systems, a PAMR network (Public Access Mobile Radio) with PMR features, and a 3rd or 4^{th}, or beyond, generation mobile network, like LTE (Long Term Evolution), with PMR features, WiMAX (Worldwide Interoperability for Microwave Access) with PMR features, WLAN (Wireless Local Area Net-work), like WiFi, with PMR features. A network with PMR features enables the provision of services with professional mobile radio (PMR) features, without any regulatory restriction regarding the targeted clientele.

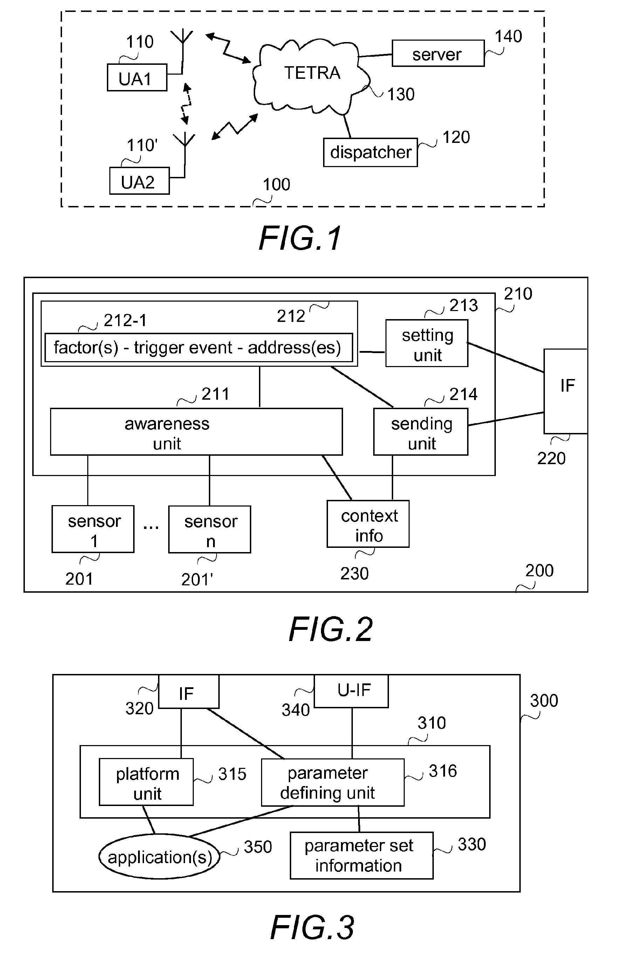

A general architecture of a communication system according to an embodiment based on TETRA is illustrated in Figure 1, without restricting embodiments to such an architecture, however. Figure 1 is a simplified system architecture only showing some apparatuses and functional entities, all being logical units whose implementation may differ from what is shown. The connections shown in Figure 1 are logical connections; the actual physical connections may be different. It is apparent to a person skilled in the art that the systems also comprise other apparatuses, functions and structures used in or for communication in TETRA. They, as well as the protocols used, are well known by persons skilled in the art and are irrelevant to the actual invention. Therefore, they need not to be discussed in more detail here.

In the example illustrated in Figure 1, the system 100 comprises two different types of TETRA user apparatuses: mobile radio apparatuses 110, 110' connectable over an air link to a TETRA system 130 and a dispatcher workstation 120. The TETRA user apparatuses are computing devices (apparatuses). Such computing devices (apparatuses) include wireless mobile communication devices that may comprise any type of subscriber identification unit or element that associates the actual terminal equipment to its present user by means of an individual TETRA identifier. In addition, a TETRA user apparatus may be assigned to one or more groups, each group having its own group identifier, and the TETRA user apparatus is capable to send and/or to receive voice and/or data and/or short data service messages addressed to any of identifiers assigned to the user or the TETRA user apparatus.

The mobile radio apparatus 110, 110' is an apparatus/equipment/ terminal providing secure voice and/or data communications for users over the air, either over the air link to network (solid line) or in a direct mode communication (dashed line) in which TETRA radio user apparatuses communicate directly with each other without using the TETRA system. Although not illustrated in Figure 1, when the mobile radio apparatuses are operating in the direct mode, they may be connected to the TETRA system via a standard direct mode gateway either directly or via one or more relaying mobile radio apparatuses, for example. The mobile radio apparatus 110, 110' may be a handheld radio apparatus, or a so called fixed radio apparatus in a vehicle, for example. Examples of handheld radio apparatuses include a handheld radio terminal, a smart-phone, a personal digital assistant (PDA), a handset, a laptop, a touch screen computer, a tablet, a notebook and a multimedia device.

The dispatcher workstation 120 illustrates a dispatching system communicating in this example with the TETRA system over a fixed connection. The dispatcher workstation 120 can communicate with the other user apparatuses, and/or manage system, subscriber, group and/or organisation-specific parameters of the radio system. It should be appreciated that the dispatcher workstation may be connected to the TETRA system over an air link and that the dispatching system may comprise several displays, communication consoles and/or computers and/or workstations or corresponding computing apparatuses. A user of a dispatcher workstation is called a dispatcher or an operator, and a location with one or more dispatchers is called a control room. Generally, the control room is the central point in the voice communications.

The TETRA system 130 may be a switching and management infrastructure (SwMI) which is equipment for a voice plus data (V+D) network enabling the TETRA user apparatuses to communicate with each other, or a combination of a WLAN and SwMI as illustrated in EP 2566290, for example. However, the details and the actual implementation of the TETRA system 130 are well known by persons skilled in the art and are irrelevant to the actual invention and to implementations. Therefore, they need not to be discussed in more detail here.

In the illustrated example, the system 100 comprises a server apparatus 140 connected to the TETRA system. The server apparatus is a computing apparatus that may be an external server apparatus or an internal server apparatus, for example connected to the dispatcher workstation. The server apparatus 140 is configured to provide storing services for the context information of interest. For that purpose the server apparatus comprises an interface (not illustrated in Figure 1) towards the TETRA system, a storing unit (not illustrated in Figure 1) configured to detect incoming context information of interest, to store the context information of interest to a data storage (not illustrated in Figure 1) of the server apparatus, to detect data retrieval requests, retrieve corresponding data from the data storage, and send it to the requester, and to detect data delete requests and to delete data from the data storage accordingly. It should be appreciated that the system 100 may be implemented without such a server apparatus. However, the server apparatus facilitates afterwards happening investigations relating to what has actually happened in the field.

Figure 2 is schematic block diagram of an exemplary user apparatus 200 only showing some units and functional entities of the user apparatus. In the illustrated example, the user apparatus is configured to collect context information of interest and transmit the context information of interest, in response to a trigger event occurring, using indicated one or more addresses. For that purpose the exemplary user apparatus 200 comprises two or more different sensors 201, 201' connected to a context engine 210 configured to generate the context information of interest based on sensor inputs and to send the context information of interest to one or more other apparatuses via one or more interfaces 220 (only one illustrated in Figure 2) of the exemplary user apparatus 200.

The sensors 201, 201' provide data about different activities and events. Examples of sensors include global navigation satellite system GNSS receivers (for location and speed), microphones (for information about noise, activities, and talking), image sensors (for digital snapshots or video stream to detect objects and activities, for example), accelerometers, inclinometers, position sensors, and gyroscopes (for movement, device orientation, and vibration), magnetic field sensors (as a compass to determine orientation), proximity and touch or other user input sensing sensors (to detect explicit and implicit user interaction), sensors for temperature, air pressure and humidity (to assess the environment), near-field communication (NFC) sensors, WiFi sensors, RFID sensors, infrared sensors, Bluetooth sensors and radio antennas (for information about connectivity), and mobile state sensors (to determine the state of the user apparatus, examples of states including if the user apparatus is open or closed, the activity in which the user is currently engaged, the battery power available, if the battery is being charged or not, and the memory available). Further, although not illustrated in Figure 2, a sensor may be an external device that measures an attribute of the user apparatus's (mobile device's) environment and then converts the attribute into a signal which can be read by the user apparatus 200. It should be noted that sensors other than those listed may also be utilized to sense data for context information.

The context engine 210 comprises a context awareness unit 211 that maintains/tracks awareness of a number of context factors and generates corresponding context information. Depending on implementation, the awareness may be maintained/tracked continuously, at certain intervals and/or upon a request to context information. As is known in the art, the context awareness unit may comprise one or more perception algorithm that is configured to "make sense" of information from the sensor(s) and classify the situations into context information, for example to a value indicating a state of the context information, like a value indicating whether a display is on or off, or whether or not a direct mode is in use. However, different from a prior art context awareness unit, the exemplary context awareness unit 211 is configured to monitor information in a parameter list unit 212 to determine at least on what context factors it should maintain/track awareness, and to generate at least the corresponding context information of interest. Further, the exemplary context awareness unit 211 may be configured to store the generated context information, or the generated context information of interest, to a memory 240 of the user apparatus. Although not described in detail herein, the context awareness unit may provide the generated context information to different applications running in the user apparatus, as is known in the art.

The context engine comprises the parameter list unit 212, the parameter list unit 212 comprising one or more parameter sets 212-1, each parameter set 212-1 associating one or more context factors with a trigger event and with one or more addresses. A parameter set may also comprise/associate some other information with the context factor(s), trigger event and/or address(es). A parameter set is added, removed, or one or more of the parameters in a parameter set are updated by a setting unit 213 of the context engine, the setting unit 213 being configured to receive setting commands via the one or more interfaces 220 and perform corresponding actions to the parameter list unit 212, or more precisely, to information stored in the parameter list unit 212. At the simplest, the parameter list unit may be a table or a list comprising one or more parameter sets, one parameter set per one row, for example, but any other form can be used as well.

The context engine 210 further comprises a sending unit 214 configured to detect an occurrence of a trigger event indicated in the parameter list unit 212 and to send, for each parameter set having the trigger event, corresponding context information of interest via the one or more interfaces 220 to the one or more addresses. The sending unit may be configured to use a group address instead of individual addresses. An advantage of using a group address is that by sending a single message that is received by several users, transmission capacity is saved. It should be appreciated that an address in a parameter set may be a group address as well as an individual address.

In other words, in addition to supporting conventional context awareness, i.e. the ability of the user apparatus to sense and act upon information about its situation/environment, such as location, time, temperature or user identity, the exemplary context engine is configured to at least maintain information on context factors indicating information of interest with related information, to track and generate the context information of interest, and to send the generated context information of interest to one or more other user apparatuses.

Figure 3 is schematic block diagram of an exemplary user apparatus 300 only showing some units and functional entities of the user apparatus. In the illustrated example, the user apparatus is configured to define parameter sets (i.e. parameterize context information of interest) and to use context information of interest received from one or more other user apparatuses. For that purpose the exemplary user apparatus 300 comprises one or more interfaces 320, a context engine 310 comprising a context information platform unit 315 and a parameter defining unit 316, a memory 330 for storing at least temporarily parameter set information, one or more user interfaces 340 and one or more applications 350 utilizing the context information of interest received from the one or more other user apparatuses. For example, the user apparatus may be a dispatcher station.

The context information platform unit 315 is configured to receive context information of interest from other user apparatuses via the one or more interfaces 320 and to provide the received context information of interest to the one or more applications 350, i.e. the context information platform unit 315 is an application platform, or part of an application platform, providing data services. Further, the context information platform unit 315 may further be configured to store the received context information of interest.

The parameter defining unit 316 is configured to define/generate and send parameter sets, or updates or other setting commands relating to parameter sets, to other user apparatuses, a parameter set comprising, as described above, at least one or more context factors associated with a trigger event and with one or more addresses whereto send the context information of interest. The parameter defining unit 316 may comprise one or more predefined parameter sets that may be linked to one or more specific applications and/or user input. In addition to or alternatively, the parameter defining unit 316 may be configured to prompt the user to accept the parameter set or provide some information to a parameter set, like adding or deleting a context factor, and/or specifying a trigger event and/or adding or deleting an address or addresses. Further, the user may be prompted to add or delete or accept recipient information, i.e. information on to where send the parameter set (one or more target recipients, i.e. one or more user apparatuses on which or on whose user's context information is wanted). The parameter defining unit 316 may be configured to receive inputs for a parameter set or related information from a running application requiring context information of interest. Further, the parameter defining unit 316 illustrated in Figure 3 is configured to store to the memory 330 parameter set information. The parameter set information comprises at least for parameter sets currently in use following information: a parameter set (context factor(s)), a trigger event, address(es) whereto send the context information of interest) and information on target recipient(s) to whom the parameter set has been sent. The parameter set information may be in a form of a table, for example.

Examples of different context factors include position data, movement data, transmission operating mode, terminal profile settings, accessory (like car kit, headset) connections, a state of battery charge, use of camera, connections, status of the user, etc. Examples of different trigger events include a position within a specified range of a certain location, movement type (walking, in a car, at a standstill, for example), network registration status a change in operating mode (network connected (Trunked Mode Operation), Direct Mode Operation (DMO), DMO via a repeater, DMO via a gateway, DMO with dual watch), man-down activation/deactivation, a change in terminal profile settings (general, silent, meeting, etc.), transmit inhibit activation/deactivation, battery charge below a certain level, power on, power off, joining/leaving a group, acknowledging an incoming group call, speaking, taking a snapshot, starting/ending an emergency call and/or an ambience listening call, and starting/ending video recording. It should be appreciated that the above lists are not exhaustive lists and any context factor and any trigger event may be used, and that same context factor may be used in several parameter sets, and the same trigger event may be used in several parameter sets.

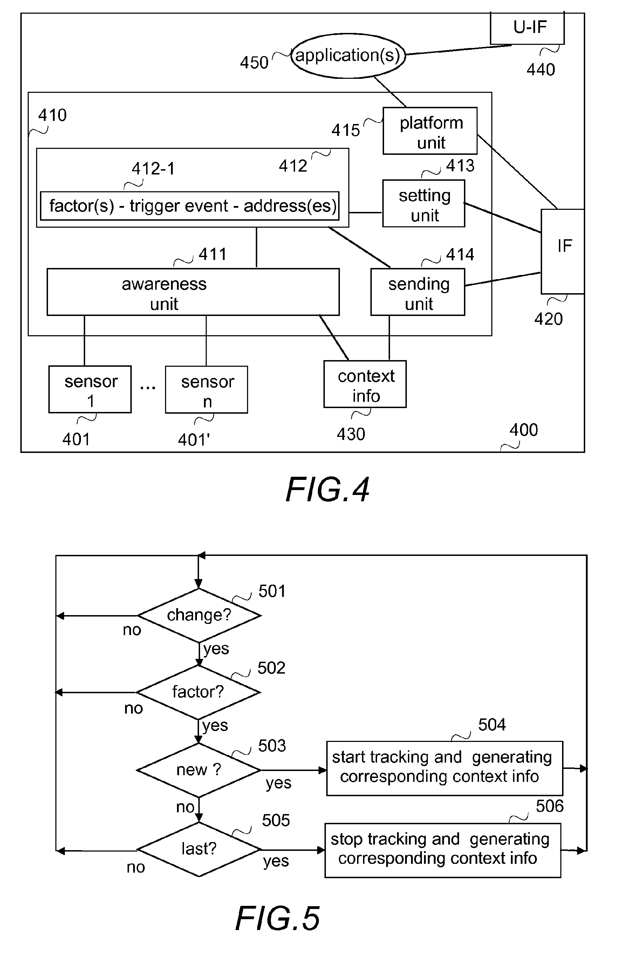

Figure 4 is schematic block diagram of an exemplary user apparatus 400 only showing some units and functional entities of the user apparatus. In the illustrated example, the user apparatus is not configured to define parameter sets for context information of interest but the user apparatus is configured both to generate context information of interest to be sent to other user apparatuses and to use context information of interest received from one or more other user apparatuses. For that purpose the exemplary user apparatus 400 comprises two or more different sensors 401, 401', a context engine 410, one or more interfaces 420, a memory 430, one or more user interfaces 440 and one or more applications 450. The context engine 410 of the exemplary user apparatus 400 comprises a context awareness unit 411, a parameter list unit 412, a setting unit 413, a sending unit 414 and a context information platform unit 415. The one or more sensors, the context awareness unit, the parameter list unit, the setting unit and the sending unit corresponds to corresponding units described above with Figure 2, and the context information platform unit corresponds to the context information platform unit described above with Figure 3.

Other exemplary user apparatuses comprise a user apparatus with a context engine comprising all units of the exemplary user apparatus of Figure 2 and all units of the exemplary user apparatus of Figure 3, a user apparatus with a context engine comprising only the platform unit, and a user apparatus with a context engine comprising only the parameter defining unit.

Figure 5 illustrates an exemplary functionality of a user apparatus configured to track and generate context information of interest. More precisely, it illustrates an exemplary functionality of the context awareness unit. In the illustrated example it is assumed that the context awareness unit is configured to track and generate only context information of interest, i.e. the context information is not generated for applications in the user apparatus, without restricting the solution to the specific example.

The information in the parameter list unit, i.e. different parameter sets in the parameter list unit, is monitored in the illustrated example continuously. When a change in one or more parameter sets in the parameter list unit is detected (step 501), it is checked (step 502), whether or not the change relates to a context factor. If the change does not relate to a context factor, the monitoring is continued.

If the change related to a context factor (step 502), it is checked (step 503) whether or not the change added a new context factor that is not in any parameter set. If a new context factor was added, the context awareness unit starts (step 504) to track one or more sensors providing information relating to the context factor and to generate corresponding context information.

If the change did not add a new context factor (step 503), it is checked (step 505), whether or not the change deleted the context factor from the last parameter set comprising the context factor, or deleted the last parameter set. If even after the change in there is a parameter set comprising the context factor, the monitoring is continued. If after the change there is no parameter set comprising the context factor (step 505), the context awareness unit stops (step 506) to track one or more sensors providing information only relating to the context factor and to generate corresponding context information.

It should be appreciated that if the context awareness unit is tracking context information for "internal use", i.e. for one or more application running in the user apparatus, it checks also context factors tracked for them in step 503 and in step 505.

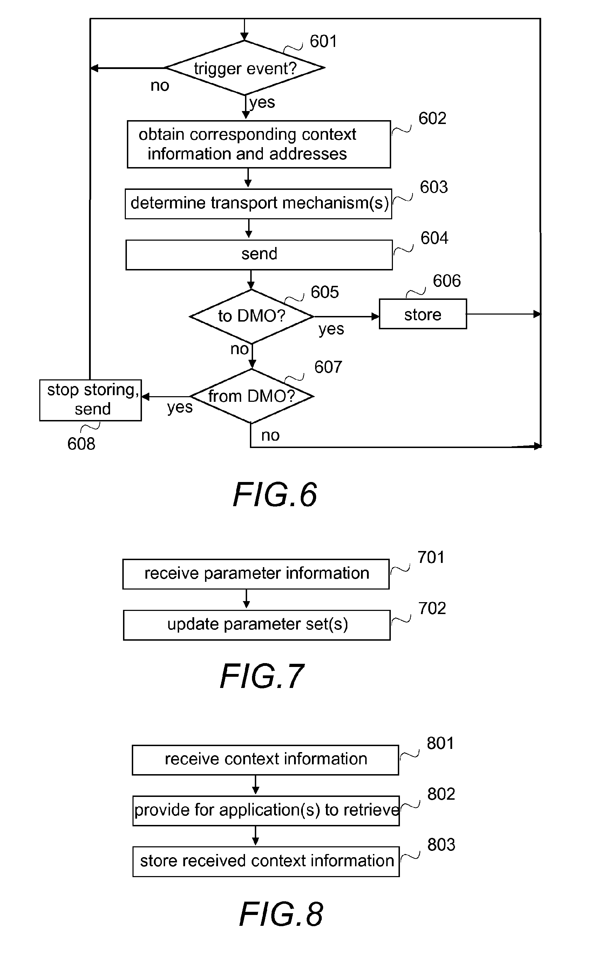

Figure 6 illustrates an exemplary functionality of a user apparatus configured to track and generate context information of interest. More precisely, it illustrates an exemplary functionality of the sending unit. In the illustrated example it is assumed that the sending unit is configured to temporarily store context information of interest when the user apparatus is in a direct mode, and when the user apparatus is not any more in the direct mode, to send the temporarily stored context information of interest to a predefined network node, for example to the server. Further, it is assumed that the sending unit is configured to send the context information of interest using the same address(es) in the direct mode and in the trunked mode. However, it should be appreciated that for the direct mode, other solutions are possible and that there are no restrictions for the transport mechanism. For example, the sending unit may be configured to send, when operating in the direct mode, the context information of interest via a direct mode gateway, or to a preconfigured address for the direct mode (i.e. the same addresses are not used in the direct mode and in the trunked mode). Yet another example is that the sending unit is configured not to send anything when operating in the direct mode but to temporarily store the context information of interest.

Occurrence of trigger events in the parameter list unit, i.e. trigger events in parameter sets, is monitored (step 601) in the illustrated example continuously. When an occurrence of a trigger event is detected, for example like 5 seconds passed after previous sending of the associated context information of interest, or a certain location is reached, context information indicated by context factors associated with the trigger event is obtained/retrieved (step 602) as well as the one or more addresses associated with the trigger event.

Then a transport mechanism is determined in step 603. The selected transport mechanism may depend on the amount of data to be transmitted and/or whether or not a voice call is going on, etc. For example, during a voice call, U-plane (user-plane) stealing may be used for transmitting the context information of interest. The stealing procedure may use similar mechanism and rules that are used for End-to-End Encryption synchronizations, the stealing providing 113 bits available in one slot. Another example is to use short data service (SDS) type 4 messages that require reserved access. If ½+½ slots are used, 84 bits are available, if ½+1 slots are used, 257 bits are available and if two half-slots are stolen using C-plane (control-plane) stealing there are 144 bits available. When an SDS type 4 message is used, the content in the message has to specify this specific use to separate this use from other SDS type 4 messages. An example of such an SDS type 4 message is following:

| *Message header* | |
|---|---|
| *Data* | |
| | |
| *Protocol ID* | *OTA (over the air)* |
| *Subprotocol* | *context information* |
| *context data 1 present* | |
| *context data 1 length* | |
| *context data 1* | |
| *context data 2 present* | |
| *context data 2 length* | |
| *context data 2* | |
| ... | |
| *context data n present* | |
| *context data n length* | |
| *context data n* | |

SDS type 1 messages or status messages, providing up to 16 bits, may be used for sending context information of interest. SDS 1 or status message can be sent with C-plane stealing and such a message fits into one random access slot. Yet other alternatives include using for data intensive information, like real-time video, IP Packet data provided by TETRA Enhanced Data Service (TEDS) and utilization of WLAN hotspots. When operating in direct mode during a voice call, SDS 1 or status messages may be sent using random access slots when the user apparatus is a receiving user apparatus (a so called slave) without interrupting voice communication. Further, SDS type 2 messages, providing up to 32 bits, and/or SDS type 3 messages, providing up to 64 bits, may also be used for conveying context information of interest, either as dedicated messages reserved for that purpose only, or in a similar way as SDS 1 messages, or SDS 4 messages.

When the transport mechanism for the context information of interest to be sent has been determined, the context information of interest is sent (step 604) using the determined transport mechanism to the indicated one or more addresses obtained in step 602. If a specific protocol identifier is used in messages transmitting context information of interest, the sending unit is configured to indicate messages transmitting context information of interest with the specific protocol identifier. Naturally, the receiving user apparatus, for example the platform unit, is configured to detect the specific protocol identifier and therefore to detect that the message contains context information of interest.

Then, in the illustrated example, it is checked (step 605), whether or not the trigger event occurrence included a transition from a trunked mode operation to a direct mode operation (DMO). If it included, the sending unit starts to temporarily store (step 606) the context information of interest that is sent in step 604 also to the memory of the user apparatus to ensure that if the sending fails, or does not reach the dispatcher workstation, for example, the information is retrievable later on. Meanwhile the sending unit continues monitoring of trigger events (step 601).

In the illustrated example, if the trigger event occurrence did not include (step 605) a transition from a trunked mode operation to a direct mode operation it is checked (step 607), whether or not the trigger event occurrence included a transition from the direct mode operation to the trunked mode operation. If it included, the sending unit stops (step 608) the storing started in step 606 and sends (step 608) the temporarily stored context information of interest to the predefined address. Meanwhile the sending unit continues monitoring of trigger events (step 601).

If the trigger event occurrence did not include (step 607) a transition from the direct mode operation to the trunked mode operation, the sending unit continues monitoring of trigger events (step 601).

In another implementation, steps 605 to 608 are omitted, and the information on which one of the trunked mode operation and direct mode operation is in use, in taken into account when the transport mechanism is determined.

Further, it should be appreciated that the apparatus may be configured to store every context information of interest (with or without parameter set) the apparatus sends, for later retrieval of the information, for example.

Since several different trigger events are monitored, there may be overlapping sending of the context information. For example, a trigger event may cause periodic sending of a current location (context information of interest) to a dispatcher, and another trigger event, like an ongoing emergency or ambience listening call, may cause continuous sending of the current location to a group address, and if the dispatcher belongs to the group, the dispatcher receives both the periodic sending and the continuous sending of the location information.

As is evident from the above, no user action is needed to send context information of interest; it is send automatically in response to a trigger event occurring.

Figure 7 illustrates an exemplary functionality of a user apparatus configured to track and generate context information of interest. More precisely, it illustrates an exemplary functionality of the setting unit.

When the user apparatus receives parameter information (step 701), for example in a setting command, a parameter set or parameter sets are updated (step 702) correspondingly. The parameter information may contain one or more new parameter sets and/or update information relating to a parameter or parameters in an existing parameter set or parameter sets, and/or an instruction to remove (delete) one or more existing parameter sets. When there are more than one parameter set in a parameter set list (unit), the setting command may indicate whether or not the parameter information is for a new parameter set, or for updating/deleting an existing parameter set. If an existing parameter set is updated or deleted, any mean to identify the parameter set may be used. For example, a parameter set may be identified by a creator of the parameter set by a combination of a running number and identifying information of the creator. Naturally, if the solution is used, identifying information is stored as part of the parameter set. Another example is that the setting command contains the parameter set that is to be updated or deleted (and if updated a new parameter set"). To illustrate, the setting command could be: update "location information-every 5 minutes-dispatcher" to "location information-once in a minute - group address 123.

Figure 8 illustrates an exemplary functionality of a user apparatus configured to receive context information of interest. More precisely, it illustrates an exemplary functionality of the platform unit.

When the user apparatus receives context information from another user apparatus (step 801), the platform unit provides (step 802) the context information to applications to retrieve, as is commonly known from platforms for data services. In addition, the platform unit may be configured to provide the applications with context awareness information generated by the context awareness unit of the same user apparatus.

Further, in the illustrated example, the received context information of interest is stored in step 803 so that it is usable for finding out afterwards what has happened. However, storing of the received context information may be omitted. For example, user apparatuses in the field may be configured not to store the received context information, whereas a dispatcher station and/or a field officer's user apparatus may be configured to store the received context information.

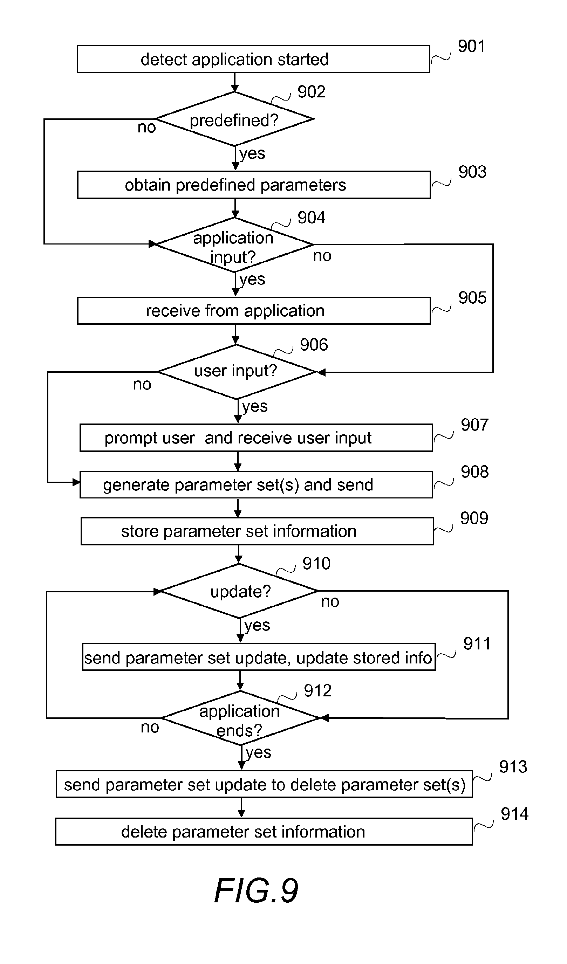

Figure 9 illustrates an exemplary functionality of a user apparatus configured to parameterize parameters to define context information of interest and whereto send it. More precisely, it illustrates an exemplary functionality of the parameter defining unit. Further, in the example it is assumed that the parameter defining unit is configured to monitor/track the applications so that a minimum user involvement is required without restricting the implementation of the example to such a solution.

When it is detected (step 901) that an application is started, it is checked (step 902) whether or not there are any predefined parameters (context factors, trigger events, addresses) for the application. If there are, they are obtained/retrieved (step 903). Then, it is checked (step 904) whether or not there are parameters the application provides as inputs. If there are, they are received (step 905). Then it is checked (step 906) whether or not user input is needed for one or more parameters. If yes, in the illustrated example, the user is prompted (step 907) correspondingly and the user input is received (step 907). In the example it is assumed that all necessary parameters are defined after the step.

If there are no predefined parameters (step 902), the process proceeds directly to check, whether or not there are parameters the application provides as inputs (step 904). If there are no parameters that the application provides as inputs, the process proceeds to step whether or not user input is needed (step 907). If user input is not needed, it is assumed that all necessary parameters are defined, or if also the user input is received, i.e. all necessary parameters are defined, one or more parameter sets are defined/generated (step 908) and send (step 908) to recipients, i.e. to the user apparatuses on which or on whose user's context information is wanted. It bears no significance how information on the recipients is obtained. For example, one or more of the recipients may be preset recipients in the apparatus and/or in the application, and/or the user may be prompted to identify one or more recipients. In the illustrated example, the parameter sets and the recipients are at least temporarily stored (step 909) as the parameter set information in order to facilitate updating of the parameter sets.

Then it is monitored whether a user input or an application input updates (step 910) one or more of the parameters or whether or not the application ends (step 912).

If one or more parameters are updated (step 910), corresponding one or more parameter sets are updated by sending (step 911) a setting command updating the one or more parameter sets, and the stored parameter set information is updated correspondingly. It should be appreciated that the update may comprise generating one or more new parameter sets, deleting one or more parameter sets and/or updating one or more definition or value in one or more parameter sets.

If the application ends (step 912), a setting command instructing to delete the one or more parameter sets generated and still valid is sent (step 913). Further, in the illustrated example the parameter set information is deleted (step 914).

In another example only predefined parameter sets are used. In the example, when it is detected that an application started (step 901), the process proceeds to step 908 in which, instead of defining one or more parameter sets, one or more parameter sets predefined for the application (or for all applications) are retrieved, and then sent, and then it is monitored in step 912, whether or not the application ends ("no" means returning to step 912), and when the application ends, the setting command instructing to delete is sent in step 913. In another example in which predefined parameter sets are updatable, updating steps 910 and 911 are also included in the procedure.

In a further example no user input is used, i.e. steps 906 and 907 are omitted and the process proceeds from step 905 to step 908.

Yet another example is that there are no predefined parameters, i.e. steps 902 and 903 are omitted, and the process proceeds from step 901 to step 904.

Based on the above examples, it is apparent to a person skilled in the art that any combination of the above steps may be used.

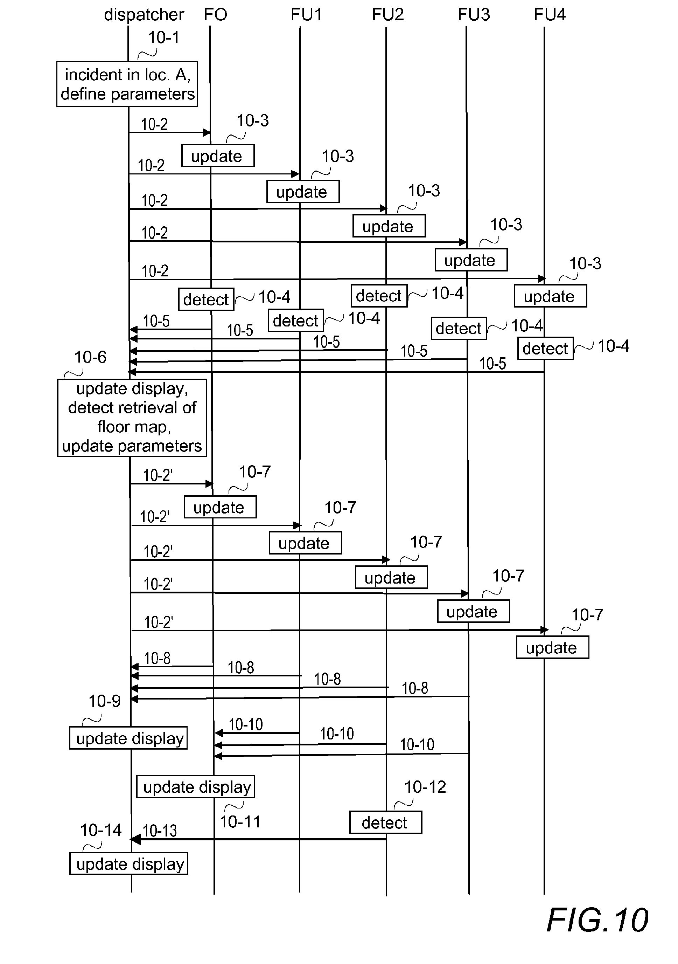

Figure 10 is a signaling chart illustrating an exemplary use case. In the example, the dispatcher has answered to a call in which it is told that in location A there has been an incident. Therefore the dispatcher starts in his/her workstation, denoted in Figure 10 as dispatcher, a corresponding application and inputs the location A. The parameter defining unit in the workstation detects the input (point 10-1) and parameterizes (defines) the parameters (point 10-1) and thereby creates a parameter set. The context factors may be a location, actions and terminal operation mode, a trigger event a combined rule that 5 seconds has passed from the previous sending and that the user apparatus is served by one of named base stations, and address whereto send the context information of interest the dispatcher workstation address. The base stations may be named using the address of the building in which the incident has happened and a requirement that a base station is within a certain distance from the incident, for example.

A corresponding setting command 10-2 is sent to a group address, the group comprising a field officer (FO denotes the field officer's user apparatus), and four more field members (FU1, FU2, FU3 and FU4 denotes corresponding user apparatuses). Each of the user apparatuses updates (point 10-3) their parameter sets correspondingly, and all user apparatuses detect (point 10-4) that a trigger event occurred, and send context information of interest 10-5 to the dispatcher.

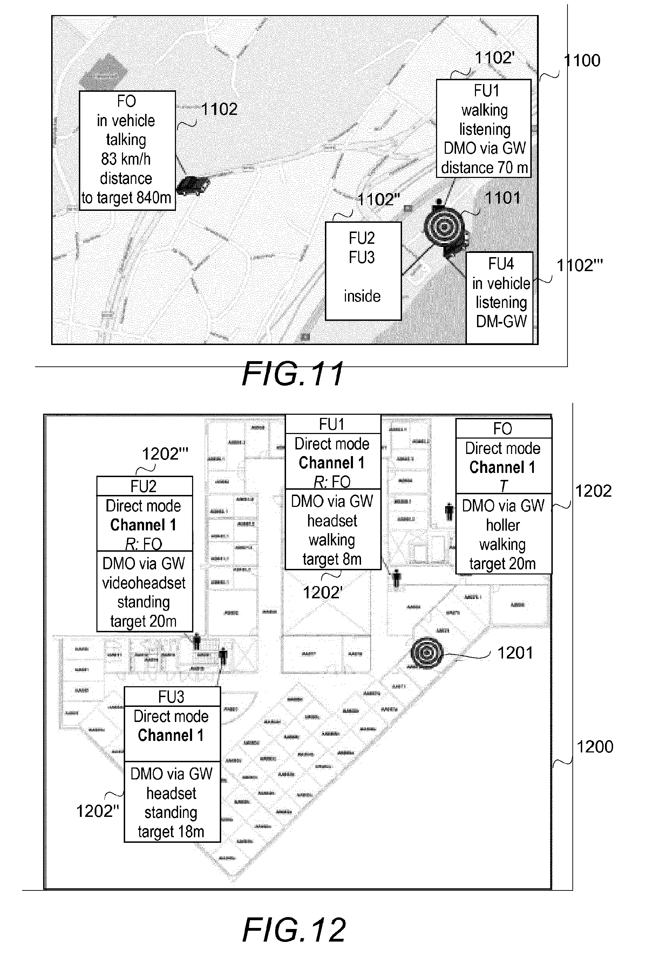

In the example it is assumed that in response to receiving the context information of interest, the application processes the information and outputs via a dispatcher display a view 1100 illustrated in Figure 11, the view containing a map, a target 1101, and illustrative information 1102, 1102', 1102", 1102'" on group members. The display is updated in response to receiving updates to the context information of interest. However, that is not shown. It should be appreciated that also other context information may be of interest and/or some the application may use the received context information to deduce other information. Examples include skills of a patrol, which group is selected, indicating reachable and non-reachable team members, and team members that are able to communicate with each other.

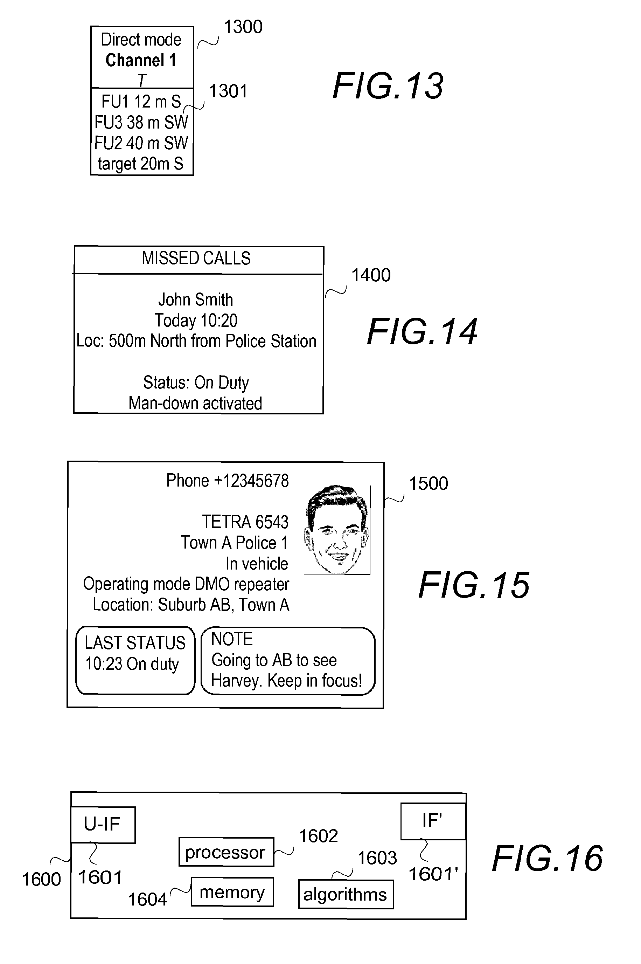

When the dispatcher detects that the field officer has entered the building, the dispatcher inputs an instructions to obtain a floor map. Alternatively the application may perform the detection and obtaining without any user input. In the illustrated example, the parameter defining unit in the dispatcher workstation detects the retrieval of the floor map and updates the parameters accordingly. For example, the context factors may be updated to contain also information on used accessories, a trigger event updated with location inside the building, and address information to contain also the address of the field officer. Further, there may be a new parameter set in which the context factors include video stream, trigger event being a rule video camera is on and the location is inside the building, and the address is the dispatcher workstation address. The information is sent in corresponding setting command 10-2' to the group address. Each of the user apparatuses updates (point 10-7) their parameter sets correspondingly, and all other user apparatuses except FU4 detect that a trigger event occurred, and send context information of interest 10-8 to the dispatcher whose display is updated (point 9-9) correspondingly. Further, since the context information of interest is associated with the field officers address, FU1, FU2 and FU3 send context information of interest 10-10 to FO whose display is updated (point 10-11) correspondingly. Figure 12 illustrates the updated dispatcher's display 1200 and Figure 13 the field officer's display 1300. As can be seen, the applications in the dispatcher workstation and in the field officer's user apparatus outputs the same information in different way, on the dispatcher's display 1200 more detailed information 1202, 1202', 1202", 1202'" on each group member inside the building is shown, whereas on the field officer's display 1300 distances 1301 to other team members and to the target is shown.

In the example of Figure 10 it is further assumed that FU2 detects (point 10-12) an occurrence of a trigger event: a video camera is turned on and the location is within the building. Therefore FU3 starts to send the video stream 10-13 to the dispatcher workstation which updates (point 10-14) a display correspondingly, i.e. outputs the video stream.

It should be appreciated that in another example context information of interest may be sent using a group address in which case all group members may receive it and update displays correspondingly. Also subgroups including group members near enough may be established for providing them context information of interest.

Figure 14 shows another example how context information of interest may be used with another application, a call register. In the illustrated example, it is assumed that user apparatuses of the organization has a parameter set defining as context factors a location and status information, as a trigger event initiation of a call establishment, and as address information an instruction to use the address used with the call establishment. In the example of Figure 14, the call register is configured to use the received context information of interest to output a more detailed information 1400 on a caller of a missed call. As can be seen from the Figure 14, the location information of the caller is tied to a specific place, which may the working place of the user on whose user apparatus the information is displayed. Other examples of such places include city landmarks and a head-quarter of the organization. The location information may be tied also to a city district or to a nearest waypoint stored to the user apparatus.

Figure 15 shows another example how context information of interest may be used. In the illustrated example, it is assumed that user apparatuses of an organization have a parameter set defining as context factors a location, status information, and note information, as a trigger event initiation adding note information, and as address information an address to a server. The information may be retrieved from the server by other user apparatuses (having proper access rights), or a monitoring application, for example, may use the information on the server to display the detailed information 1500 on a screen in a monitoring room in a police station, for example.

Another example is that user apparatuses of an organization have a parameter set defining as context factors a contact card, as a trigger event change in contact card, and as address information and address to a server. One or more of the user apparatuses may comprise a phonebook application that is configured to retrieve from the server the context information of interest, on contacts in a contact list. If the context information of interest in the server also contains information on operation mode (direct/trunked), the phonebook application may be configured to update the retrieved information to show contacts that are also in the direct mode. Yet another example assumes that the context information of interest also contains location information, and that the phonebook application is configured to show contacts within a certain range, like 500 meters. For example, when a user switches to direct mode operation, the phonebook may be configured to show contact-specifically contacts that are (or at least whose user apparatuses are) within the 500 meters and whose user apparatus are in direct mode.

The steps/points, messages and related functions described above in Figures 4 to 10 are in no absolute chronological order, and some of the steps/points may be performed simultaneously or in an order differing from the given one. Other functions can also be executed between the steps/points or within the steps/points and other messages sent between the illustrated messages. Some of the steps/points or part of the steps/points can also be left out or replaced by a corresponding step/point or part of the step/point. For example, the transport mechanism may be given in the parameter set, as a common transport mechanism and/or address-specifically, or the user apparatus may be configured always to use one transport mechanism. The messages are only exemplary and may even comprise several separate messages for transmitting the same information. In addition, the messages may also contain other information and/or be of different type.

The techniques described herein may be implemented by various means so that an apparatus implementing one or more functions of a corresponding apparatus described with an embodiment/example/implementation comprises not only prior art means, but also means for implementing the one or more functions of a corresponding apparatus described with an embodiment and it may comprise separate means for each separate function, or means may be configured to perform two or more functions. For example, the context awareness unit, and/or the sending unit, and/or the setting unit, and/or the parameter list unit, and/or the platform unit, and/or the parameter defining unit may be software and/or software-hardware and/or hardware and/or firmware components (recorded indelibly on a medium such as read-only-memory or embodied in hard-wired computer circuitry) or combinations thereof. Software codes may be stored in any suitable, processor/computer/apparatus-readable data storage medium(s) or memory unit(s) or article(s) of manufacture and executed by one or more processors/computers, hardware (one or more apparatuses), firmware (one or more apparatuses), software (one or more modules), or combinations thereof. For a firmware or software, implementation can be through modules (e.g., procedures, functions, and so on) that perform the functions described herein. Software codes may be stored in any suitable, processor/computer-readable data storage medium(s) or memory unit(s) or article(s) of manufacture and executed by one or more processors/computers.

Figure 16 is a simplified block diagram illustrating some units for an apparatus 1600 configured to be a non-legacy user apparatus, i.e. an apparatus comprising at least one of the context engines described above. In the illustrated example the apparatus comprises one or more interfaces (IF) 1601 for receiving and transmitting information over the corresponding infrastructure, like the TETRA, one or more user interfaces (U-IF) 1601' for interaction with a user, a processor 1602 configured to implement at least the context awareness unit, and/or the sending unit, and/or the setting unit, and/or the parameter list unit, and/or the platform unit, and/or the parameter defining unit functionality described herein with a corresponding algorithm/algorithms 1603 and a memory 1604 usable for storing a program code required at least for the context engine comprising the context awareness unit, and/or the sending unit, and/or the setting unit, and/or the parameter list unit, and/or the platform unit, and/or the parameter defining unit. The memory 1604 is also usable for storing other possible information, like the phonebook, waypoints, head-quarters, etc.

In other words, an apparatus configured to provide the user apparatus, or an apparatus configured to provide one or more corresponding functionalities, is a computing device that may be any apparatus or device or equipment configured to perform one or more of corresponding apparatus functionalities described with an embodiment/example/implementation, and it may be configured to perform functionalities from different embodiments/examples/ implementations. The units described with an apparatus may be separate units, even located in another physical apparatus, the distributed physical apparatuses forming one logical apparatus providing the functionality, or a unit may be integrated to another unit in the same apparatus. For example, the setting unit may be integrated with the sending unit, and/or with the parameter list unit, and/or with the platform unit, and/or with the parameter defining unit, and/or with the context awareness unit, and the same applies to the other units.

More precisely, an apparatus configured to provide the user apparatus, or an apparatus configured to provide one or more corresponding functionalities, may generally include a processor, controller, control unit, microcontroller, or the like connected to a memory and to various interfaces of the apparatus. Generally the processor is a central processing unit, but the processor may be an additional operation processor. Each or some or one of the units and/or codecs and/or algorithms described herein may be configured as a computer or a processor, or a microprocessor, such as a single-chip computer element, or as a chipset, including at least a memory for providing storage area used for arithmetic operation and an operation processor for executing the arithmetic operation. Each or some or one of the units and/or codecs and/or algorithms described above may comprise one or more computer processors, application-specific integrated circuits (ASIC), digital signal processors (DSP), digital signal processing devices (DSPD), programmable logic devices (PLD), field-programmable gate arrays (FPGA), and/or other hardware components that have been programmed in such a way to carry out one or more functions or calculations of one or more embodiments. In other words, each or some or one of the units and/or the algorithms described above may be an element that comprises one or more arithmetic logic units, a number of special registers and control circuits.

Further, an apparatus implementing functionality or some functionality according to an embodiment/example/implementation of a user apparatus, or an apparatus configured to provide one or more corresponding functionalities, may generally include volatile and/or non-volatile memory, for example EEPROM, ROM, PROM, RAM, DRAM, SRAM, double floating-gate field effect transistor, firmware, programmable logic, etc. and typically store content, data, or the like. The memory or memories may be of any type (different from each other), have any possible storage structure and, if required, being managed by any database/memory management system. The memory may also store computer program code such as software applications (for example, for one or more of the units/algorithms/codecs) or operating systems, information, data, content, or the like for the processor to perform steps associated with operation of the apparatus in accordance with examples/embodiments. The memory, or part of it, may be, for example, random access memory, a hard drive, or other fixed data memory or storage device implemented within the processor/apparatus or external to the processor/apparatus in which case it can be communicatively coupled to the processor/apparatus via various means as is known in the art. An example of an external memory includes a removable memory detachably connected to the apparatus.

In addition, an apparatus implementing functionality or some functionality according to an embodiment/example/implementation of the user apparatus, or an apparatus configured to provide one or more corresponding functionalities, may generally comprise different interface units, such as one or more receiving units for receiving user data, control information, requests and responses, for example, and one or more sending units for sending user data, control information, responses and requests, for example. The receiving unit and the transmitting unit each provides an interface in an apparatus, the interface including a transmitter and/or a receiver or any other means for receiving and/or transmitting information, and performing necessary functions so that content and other user data, control information, etc. can be received and/or transmitted. The receiving and sending units may comprise a set of antennas, the number of which is not limited to any particular number.

Further, an apparatus implementing functionality or some functionality according to an embodiment/example/implementation of a user apparatus, or an apparatus configured to provide one or more corresponding functionalities, may comprise other units, like the sensors described above.

It will be obvious to a person skilled in the art that, as technology advances, the inventive concept can be implemented in various ways. The invention and its embodiments are not limited to the examples described above but may vary within the scope of the claims.

## Claims

1. A method for obtaining context information in a private mobile network, the method comprising:
maintaining in a first mobile apparatus at least one parameter set comprising at least one or more context factors indicating context information of interest, a trigger event indicating when to send the context information of interest, and address information indicating where in the private mobile net-work to send the context information of interest;
tracking in the first mobile apparatus context information relating to the one or more context factors;
detecting an occurrence of the trigger event; and
sending from the first mobile apparatus the tracked context information of interest using the address information.

2. A method as claimed in claim 1, further comprising:
receiving in the first apparatus at least one update to the at least one parameter set;
updating the at least one parameter set; and
performing the tracking, detecting and sending using updated information.

3. A method as claimed in claim 1 or 2, further comprising:
selecting a transport mechanism for the tracked context information of interest; and
using the selected transport mechanism when the tracked context information of interest is sent.

4. A method as claimed in claim 1, 2, or 3, further comprising:
receiving context information of interest from at least one second mobile user apparatus; and
providing one or more applications running in the first mobile apparatus with the received context information of interest.

5. A method as claimed in any of preceding claims, wherein the one or more context factors include position data and/or movement data and/or transmission operating mode and/or terminal profile settings and/or accessory connections and/or a state of battery charge and/or use of camera and/or connections and/or status of the user.

6. A method comprising:
running on a first apparatus in a private mobile network an application configured to process at least context information of interest of one or more mobile user apparatuses to displayable information;
receiving context information of interest from at least one mobile user apparatus; and
providing the application with the received context information of interest.

7. A method as claimed in claim 6, further comprising:
tracking in the first apparatus the context information of interest; and
providing the application with the context information of interest tracked by the first apparatus.

8. A method as claimed in claim 6 or 7, further comprising:
processing, by the application, the context information of interest;
displaying, by the first apparatus, the result of the processing.

9. A method as claimed in claim 6, 7 or 8, further comprising:
determining, in order to receive the context information of interest, one or more parameter sets comprising at least one or more context factors to be tracked to obtain at least a piece of the context information of interest, a trigger event indicating when the piece of the context information of interest is to be sent, and an address of the first apparatus;
determining one or more mobile user apparatuses wherefrom the context information of interest is wanted; and
sending the one or more parameter sets to the one or more mobile user apparatuses.

10. A method as claimed in any of claims 1 to 5 and 9, wherein the trigger event is detecting one of the following: a position within a specified range of a certain location, movement type, network registration status, a change to trunked mode operation, a change to direct mode operation, direct mode operation via a repeater, direct mode operation via a gateway, direct mode operation with dual watch, man-down activation, mad-down deactivation, a change in terminal profile settings, transmit inhibit activation, transmit inhibit deactivation, power off, power on, battery charge below a certain level, joining or leaving a group, acknowledging an incoming group call, speaking, taking a snapshot, starting or ending an emergency call, starting or ending an ambience listening call, and starting or ending video recording.

11. An apparatus comprising means for implementing a method as claimed in any of claims 1 to 10.

12. A computer program product comprising program instructions which, when run on a computing apparatus, causes the computing apparatus to perform a method according to any of claims 1 to 10.

13. A private mobile network system comprising at least:
one or more mobile user apparatus comprising means for implementing a method as claimed in any of claims 1 to 5 and 10, when combined with any of claims 1 to 5; and
one or more apparatuses comprising means for implementing a method as claimed in any of claims 6 to 10.

14. A private mobile network system as claimed in claim 13, wherein the private mobile network system is based on a professional mobile radio network, and the one or more apparatuses comprises at least a dispatcher station.

15. A private mobile network system as claimed in claim 13 or 14, wherein the private mobile network system is based on a terrestrial trunked radio, and a the context information of interest is transmitted in a short data service type 4 message specifying that the message contains context information of interest, or in a status message, or in a short data service type 1 message, or in a short data service type 2 message, or in a short data service type 3 message.
